# FASCICULE DE BREVET EUROPEEN

(11) **EP 1 608 546 B1**
(45) Date de publication et mention de la délivrance du brevet: **23.04.2008**
(21) Numéro de dépôt: 04742312.4
(22) Date de dépôt: 23.03.2004
(51) Int. Cl.: B62K 3/00, B62K 5/02

(54) **VEHICULE TERRESTRE DU TYPE TROTTINETTE, PATINETTE OU ANALOGUE**
LANDFAHRZEUG WIE ZUM BEISPIEL EIN TRETROLLER, ROLLER ODER DERGLEICHEN
LAND VEHICLE, SUCH AS A SCOOTER, COASTER OR THE LIKE

(30) Priorité: 28.03.2003 FR 0303838
(43) Date de publication de la demande: 28.12.2005
(73) Titulaire: Linderoth, Carl Fredrik, 8032 Zürich (CH)
(72) Inventeur: LINDEROTH, Elisabeth, F-75017 Paris (FR)
(74) Mandataire: Flavenot, Bernard
(86) Numéro de dépôt international: PCT/FR2004/000702
(87) Numéro de publication internationale: WO 2004/087491

(56) Documents cités:
- DE-A- 10 061 612
- FR-A- 2 689 082
- GB-A- 1 505 224
- US-A- 4 050 711
- US-A- 5 328 193

## Description

La présente invention concerne les véhicules terrestres du type trottinettes, patinettes ou analogues.

II est déjà connu des véhicules du type trottinettes qui comportent schématiquement une plaque montée sur deux petites roues, la roue avant étant généralement orientable à l'aide d'un guidon et d'une colonne de guidage, l'utilisateur posant un pied sur la plaque tandis que, avec l'autre pied, il fait mouvoir le véhicule. Le polygone de sustentation d'un tel véhicule est donc limité à une portion de droite, ce qui ne lui confère pas une grande stabilité sauf lorsqu'il est en mouvement, par effet gyroscopique.

Pour pallier l'inconvénient de l'instabilité de ce véhicule au repos, il a été réalisé des véhicules du type tricycles dont le polygone de sustentation a alors la forme d'un triangle. Avec ce type de véhicule, la stabilité au repos est bien obtenue. En revanche, lorsque l'utilisateur pose l'un des pieds sur la plaque généralement maintenue entre les trois roues, l'autre pied avec lequel il fait mouvoir le tricycle est nettement en déport par rapport à la plaque, ce qui confère à l'utilisateur une position peu confortable, avec en plus le risque de buter, avec cet autre pied, contre des obstacles extérieurs au véhicule.

De tels véhicules sont par exemple décrits dans le US 4 050 711 A et le DE 100 61 612 A.

Cependant, les trottinettes décrites dans ces deux documents ne peuvent pas être utilisées en toute sécurité car, soit elles n'ont pas un polygone de sustentation important, soit elles ne sont pas utilisables de façon pratique comme les trottinettes classiques. En plus, lorsqu'elles sont repliées, elles présentent un encombrement important, ce qui ne facilite pas leur rangement et/ou leur transport.

Aussi, la présente invention a-t-elle pour but de réaliser un véhicule terrestre du type trottinette, patinette ou analogue qui pallie en grande partie les inconvénients mentionnés ci-dessus des véhicules antérieurs de ce type.

Plus précisément, la présente invention a pour objet un véhicule terrestre du type trottinette, patinette ou analogue, comportant :
une colonne de guidage,
des moyens de maintien de la colonne de guidage par une personne, ces moyens de maintien étant agencés à une première extrémité de ladite colonne de guidage,
des premiers moyens de roulement sur le sol terrestre agencés à la seconde extrémité de la colonne de guidage,
un manchon en forme de palier de rotation, ladite colonne de guidage étant montée rotative dans le manchon de façon que ce dit manchon soit situé entre les première et seconde extrémités de la colonne de guidage,
deux longerons,
des moyens pour monter une première extrémité de chacun des deux longerons en association avec ledit manchon de façon que les deux dits longerons, d'une part soient situés dans un premier plan faisant avec l'axe de la colonne de guidage un angle non nul, et d'autre part soient aptes à délimiter entre eux un espace sensiblement en **V** dont le sommet est sensiblement situé au niveau dudit manchon, et
des deuxièmes et troisièmes moyens de roulement sur le sol terrestre agencés respectivement aux secondes extrémités des deux dits longerons, de façon que chacun des trois moyens de roulement soit aptes à prendre contact avec ledit sol terrestre en au moins un point de contact, lesdits trois points de contact définissant un plan de roulement,
**caractérisé par le fait que** lesdits moyens pour monter la première extrémité de chacun des deux longerons en association avec ledit manchon comportent :
une platine,
des moyens pour monter ladite platine en rotation par rapport audit manchon autour d'un premier axe de rotation sensiblement perpendiculaire à l'axe de ladite colonne de guidage, et
des moyens pour monter lesdites premières extrémités des deux longerons en rotation par rapport à ladite platine autour respectivement de deux deuxième et troisième axes sensiblement perpendiculaires audit plan de roulement.

D'autres caractéristiques et avantages de l'invention apparaîtront au cours de la description suivante donnée en regard des dessins annexés à titre illustratif mais nullement limitatif, dans lesquels :

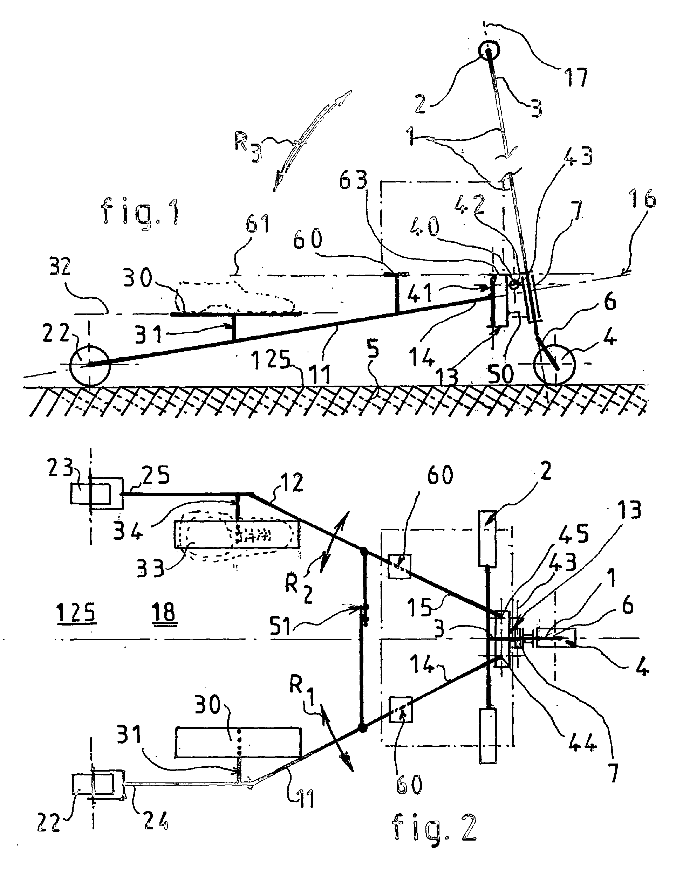

Les figures 1 et 2 représentent, sous forme schématique, respectivement en vue de côté et de dessus, un mode de réalisation d'un véhicule du type trottinette, patinette ou analogue selon l'invention, et

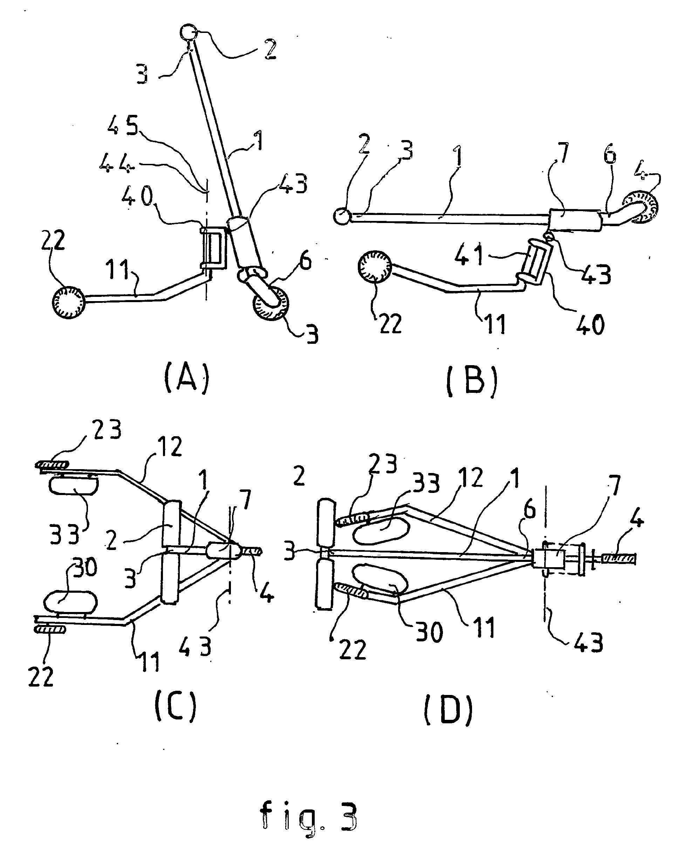

Les figures 3 (A), (B), (C) et (D) représentent, sous forme schématique et simplifiée, quatre vues du véhicule du type trottinette, patinette ou analogue selon l'invention en accord avec le mode de réalisation selon les figures 1 et 2, les figures 3A et 3C représentant respectivement une vue de côté et une vue de dessus du véhicule lorsqu'il est en configuration d'utilisation, les figures 3B et 3D représentant respectivement une vue de côté et une vue de dessus du véhicule lorsqu'il est en configuration repliée.

Il est bien précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Le Demandeur tient aussi à préciser que les figures représentent un mode de réalisation de l'objet selon l'invention, mais qu'il peut exister d'autres modes de réalisation qui répondent à la définition de cette invention.

Par référence plus particulièrement aux figures 1 et 2, le véhicule terrestre du type trottinette, patinette ou analogue selon l'invention comporte une colonne de guidage 1, des moyens de maintien 2 de la colonne de guidage par une personne, ces moyens de maintien étant agencés à une première extrémité 3 de la colonne de guidage, et des premiers moyens de roulement 4 sur le sol terrestre 5 agencés à la seconde extrémité 6 de cette colonne de guidage.

Dans un mode de réalisation possible, la colonne de guidage 1 est par exemple constituée par un tube métallique de section avantageusement circulaire, ce tube pouvant être d'une seule pièce ou bien télescopique. Une telle colonne de guidage est bien connue en elle-même, par exemple du même type que celle que l'on trouve notamment sur les trottinettes de l'art antérieur, et elle ne sera donc pas plus amplement décrite ici dans l'unique souci de simplifier la présente description.

Quant aux moyens de maintien 2 par une personne, ils peuvent être comme ceux illustrés à titre d'exemple, en forme de guidon ou analogue, et les premiers moyens de roulement 4 sur le sol terrestre 5 agencés à la seconde extrémité 6 de la colonne de guidage 1 peuvent être constitués comme illustré, par une roulette, ou même par plusieurs de telles roulettes, par exemple deux montées en parallèle.

Le véhicule selon l'invention comporte en outré un système du type manchon 7 ou analogue en forme de palier de rotation, la colonne de guidage 1 étant montée rotative dans ce manchon 7 de façon qu'il soit situé entre les première et seconde extrémités 3, 6 de la colonne de guidage, et avantageusement assez proche de l'extrémité 6 comportant les premiers moyens de roulement, ce manchon étant maintenu par exemple entre deux butées solidaires de la colonne de guidage 1.

Le véhicule comporte aussi deux longerons 11, 12, des moyens 13 pour monter respectivement une première extrémité 14, 15 de chacun des deux longerons en association avec le manchon 7 de façon que les deux longerons 11, 12, d'une part soient situés dans un premier plan 16 faisant avec l'axe 17 de la colonne de guidage un angle non nul, par exemple de l'ordre de quatre-vingt-dix degrés, et d'autre part soient aptes à délimiter entre eux un espace 18 sensiblement en **V** ou analogue dont le sommet 19 est sensiblement situé au niveau du manchon 7, et des deuxièmes et troisièmes moyens de roulement 22, 23 sur le sol terrestre 5, comme des roulettes, agencés respectivement aux secondes extrémités 24, 25 des deux longerons 11, 12, de façon que chacun des trois moyens de roulement 4, 22, 23 soit apte à prendre contact avec le sol terrestre 5 en au moins un point de contact, ces trois points de contact définissant un plan de roulement 125, ainsi que le polygone de sustentation du véhicule comme décrit ci-après.

Chaque longeron peut bien entendu être réalisé de différentes façons, soit d'un seul tube, soit par la combinaison de plusieurs tubes pour obtenir une meilleure rigidité.

Selon une réalisation avantageuse, le véhicule comporte en outre au moins un premier repose-pied 30 et des premiers moyens 31 pour solidariser le premier repose-pied 30 avec l'un 11 des deux longerons, de façon que ce premier repose-pied 30 soit sensiblement défini dans un deuxième plan 32 avantageusement sensiblement parallèle au plan de roulement 125 et dans ledit espace 18 en V, c'est-à-dire compris dans l'espace défini par les deux plans imaginaires perpendiculaires au plan de roulement 125 et passant respectivement par les deux longerons.

De façon préférentielle, comme dans le mode de réalisation illustré, le véhicule comporte un second repose-pied 33 et des seconds moyens 34 pour solidariser ce second repose-pied avec l'autre 12 des deux longerons, de façon que ce second repose-pied soit sensiblement défini dans le deuxième plan 32 et dans l'espace 18 en V, c'est-à-dire compris dans l'espace défini par les deux plans imaginaires perpendiculaires au plan de roulement 125 et passant respectivement par les deux longerons 11, 12.

Dans une première réalisation avantageuse, les moyens 13 pour monter les premières extrémités 14, 15 des deux longerons 11, 12 en association avec le manchon 7 comportent une platine 40, des premiers moyens 41 pour monter les premières extrémités 14, 15 des deux longerons 11, 12 en coopération avec cette platine 40, et des moyens 42 pour monter la platine 40 en rotation R₃ par rapport au manchon 7 autour d'un premier axe de rotation 43 sensiblement perpendiculaire à l'axe 17 de la colonne de guidage 1.

Dans une deuxième réalisation avantageuse, les moyens 13 pour monter les premières extrémités 14, 15 des deux longerons 11, 12 en association avec le manchon 7 comportent une platine 40, des moyens 41 pour monter les premières extrémités 14, 15 des deux longerons en rotation R₁, R₂ par rapport à ladite platine 40 autour respectivement de deux deuxième et troisième axes 44, 45 sensiblement perpendiculaires au plan de roulement 125.

Mais comme illustré sur toutes les figures, dans une réalisation tout particulièrement préférentielle, les moyens 13 pour monter les premières extrémités 14, 15 des deux longerons 11, 12 en association avec le manchon 7 comportent une platine 40, des moyens 42 pour monter la platine 40 en rotation R₃ par rapport au manchon 7 autour d'un premier axe de rotation 43 sensiblement perpendiculaire à l'axe 17 de la colonne de guidage 1, et des moyens 41 pour monter les premières extrémités 14, 15 des deux longerons 11, 12 en rotation R₁, R₂ par rapport à la platine 40 autour respectivement de deux deuxième et troisième axes 44, 45 sensiblement perpendiculaires au plan de roulement 125.

Il est également particulièrement avantageux que, par sécurité, le véhicule comporte en outre des premiers moyens de blocage commandables 50 de la rotation de la platine 40 avec le manchon 7. Ces premiers moyens de blocage commandables peuvent être réalisés de plusieurs façons. Dans le mode de réalisation illustré, ils sont constitués par des moyens de crochet à rappel élastique ou analogue. Ils ne présentent cependant aucune difficulté de réalisation par un homme du métier et ne seront donc pas plus amplement définis ici dans l'unique souci de ne pas alourdir la présente description.

De même, comme plus particulièrement illustré sur la figure 2 et toujours par souci de sécurité, le véhicule comporte avantageusement en outre des seconds moyens de blocage commandables 51 des deux longerons 11, 12 quand ils forment l'espace en **V.** Ces seconds moyens de blocage commandables 51 peuvent être réalisés de plusieurs façons, par exemple par deux leviers montés pivotant respectivement sur les deux longerons 11, 12 avantageusement à proximité de la platine 40 et l'un sur l'autre, avec des moyens de crochet pour lier solidairement les deux leviers entre eux. Ces seconds moyens de blocage commandables 51, eux non plus, ne présentent pas de difficulté de réalisation par un homme du métier, et ils ne seront donc pas plus amplement définis ici dans l'unique souci de ne pas alourdir la présente description.

Comme illustré sur les figures 1 et 2, le véhicule comporte en outre des moyens de plateau 60 réalisés sur chaque longeron 11, 12, ces moyens de plateau 60 étant définis dans un troisième plan 61 sensiblement parallèle au plan de roulement 125, ce troisième plan 61 passant de préférence sensiblement par le point 63 de la platine 40 le plus éloigné du plan de roulement 125, figure 1.

Le véhicule selon l'invention s'utilise comme des trottinettes ou des patinettes de l'art antérieur, mais présente des avantages non négligeables par rapport à elles.

En effet, lorsqu'une personne veut utiliser un véhicule selon l'invention, elle pose son pied d'appui habituel sur l'un des repose-pieds 30, 33, avec son pied de poussée entre les deux longerons 11, 12. Par exemple, si le pied d'appui de l'utilisateur du véhicule est son pied gauche, c'est le pied gauche qu'il posera sur le repose-pied 33, son pied droit de poussée se trouvant entre les deux repose-pieds 32, 33.

En conséquence de la position de l'utilisateur telle que définie ci-dessus, le véhicule selon l'invention présente les avantages suivants :

L'utilisateur se trouve toujours sensiblement à la verticale du barycentre du polygone de sustentation formé par les trois roulettes 4, 22, 23, ce qui confère à l'ensemble véhicule-utilisateur une très bonne stabilité, même à l'arrêt.

Les membres inférieurs de l'utilisateur du véhicule sont toujours protégés, notamment lors de la progression du véhicule, du fait essentiellement qu'il se trouve toujours dans l'espace en **V** 1S entre les deux longerons 11, 12.

Du fait de la position des deux longerons, l'utilisateur peut positionner, devant lui, un récipient comme un panier schématiquement représenté en traits interrompus sur les figures 1 et 2, panier qui sera, lui aussi, maintenu de façon stable puisqu'il pourra reposer, en trois points distincts, sur les deux plateaux 60 et le point le plus haut 63 de la platine 40, et ce, même lorsque le véhicule sera à l'arrêt.

De plus, du fait de la réalisation particulière du véhicule décrite ci-dessus, bien qu'il présente, lors de sa configuration d'utilisation (figures 3A et 3C) un encombrement plus important que celui des véhicules similaires à deux roues de l'art antérieur, son encombrement en configuration repliée (figures 3B et 3D) n'est guère plus important que celui des mêmes véhicules similaires à deux roues.

## Revendications

1. Véhicule terrestre du type trottinette, patinette ou analogue, comportant:
une colonne de guidage (1),
des moyens de maintien (2) de la colonne de guidage par une personne, ces moyens de maintien étant agencés à une première extrémité (3) de ladite colonne de guidage,
des premiers moyens de roulement (4) sur le sol terrestre (5) agencés à la seconde extrémité (6) de la colonne de guidage (1),
un manchon (7) en forme de palier de rotation, ladite colonne de guidage (1) étant montée rotative dans le manchon (7) de façon que ce dit manchon soit situé entre les première et seconde extrémités (3, 6) de la colonne de guidage,
deux longerons (11, 12),
des moyens (13) pour monter une première extrémité (14, 15) de chacun des deux longerons en association avec ledit manchon (7) de façon que les deux dits longerons (11, 12), d'une part soient situés dans un premier plan (16) faisant avec l'axe (17) de la colonne de guidage un angle non nul, et d'autre part soient aptes à délimiter entre eux un espace (18) sensiblement en V dont le sommet (19) est sensiblement situé au niveau dudit manchon (7), et
des deuxièmes et troisièmes moyens de roulement (22, 23) sur le sol terrestre (5) agencés respectivement aux secondes extrémités (24, 25) des deux dits longerons (11, 12), de façon que chacun des trois moyens de roulement (4, 22, 23) soit aptes à prendre contact avec ledit sol terrestre (5) en au moins un point de contact, lesdits trois points de contact définissant un plan de roulement (125), **caractérisé par le fait que** lesdits moyens (13) pour monter la première extrémité (14, 15) de chacun des deux longerons (11, 12) en association avec ledit manchon (7) comportent :
une platine (40),
des moyens (42) pour monter ladite platine (40) en rotation (R₃) par rapport audit manchon (7) autour d'un premier axe de rotation (43) sensiblement perpendiculaire à l'axe (17) de ladite colonne de guidage (1), et
des moyens (41) pour monter lesdites premières extrémités (14, 15) des deux longerons (11, 12) en rotation (R₁, R₂) par rapport à ladite platine (40) autour respectivement de deux deuxième et troisième axes (44, 45) sensiblement perpendiculaires audit plan de roulement (125).

2. Véhicule terrestre selon la revendication 1, **caractérisé par le fait qu'**il comporte en outre au moins un premier repose-pied (30) et des premiers moyens (31) pour solidariser ledit premier repose-pied (30) avec l'un (11) des deux longerons, de façon que ce dit premier repose-pied (30) soit sensiblement défini dans un deuxième plan (32) sensiblement parallèle au plan de roulement (125) et dans ledit espace (18) en **V**.

3. Véhicule terrestre selon la revendication 2, **caractérisé par le fait qu'**il comporte un second repose-pied (33) et des seconds moyens (34) pour solidariser ce dit second repose-pied avec l'autre (12) des deux longerons, de façon que ledit second repose-pied soit sensiblement défini dans le deuxième plan (32) et dans ledit espace (18) en **V**.

4. Véhicule terrestre selon l'une des revendications 1 à 3, **caractérisé par le fait qu'**il comporte des premiers moyens de blocage commandables (50) de la rotation de ladite platine (40) avec ledit manchon (7).

5. Véhicule terrestre selon l'une des revendications 1 à 4, **caractérisé par le fait qu'**il comporte des seconds moyens de blocage commandables (51) des deux dits longerons (11, 12) quand ils forment ledit espace en **V**.

6. Véhicule terrestre selon l'une des revendications 1 à 5, **caractérisé par le fait qu'**il comporte des moyens de plateau (60) réalisés sur chaque longeron (11, 12), ces moyens de plateau (60) étant définis dans un troisième plan (61) sensiblement parallèle audit plan de roulement (125).

7. Véhicule terrestre selon la revendication 6, **caractérisé par le fait que** ledit troisième plan (61) passe sensiblement par le point (63) de ladite platine (40) le plus éloigné dudit plan de roulement (125).

## Claims

1. A terrestrial vehicle of the scooter, coaster, or like type, the vehicle comprising:
· a steering column (1);
· handle means (2) enabling a person to hold the steering column, said handle means being arranged at a first end (3) of said steering column;
· first wheel means (4) for rolling on the ground (5) arranged at the second end (6) of the steering column (1);
· a sleeve (7) forming a rotary bearing, said steering column (1) being pivotally mounted in the sleeve (7) in such a manner that said sleeve is situated between the first and second ends (3, 6) of the steering column;
· two side members (11, 12);
· mounting means (13) for mounting a first end (14, 15) of each of the two side members in association with said sleeve (7) in such a manner that said two side members (11, 12) are firstly situated in a first plane (16) forming a non-zero angle with the axis (17) of the steering column, and secondly are suitable for defining between them a substantially V-shaped space (18) with its vertex (19) being situated substantially at said sleeve (7); and
· second and third wheel means (22, 23) for rolling on the ground (5) arranged respectively at the second ends (24, 25) of said two side members (11, 12) in such a manner that each of the three wheel means (4, 22, 23) is suitable for making contact with said ground (5) at at least one contact point, said three contact points defining a rolling plane (125),
the vehicle being **characterized by the fact that** said means (13) for mounting the first end (14, 15) of each of the two side members (11, 12) in association with said sleeve (7) comprise:
· a bracket (40);
· mean (42) for mounting said bracket (40) to pivot (4₃) relative to said sleeve (7) about a first pivot axis (43) substantially perpendicular to the axis (17) of said steering column (1); and
· means (41) for mounting said first ends (14, 15) of the two side members (11, 12) to pivot (R₁, R₂) relative to said bracket (40) about respective second and third axes (44, 45) substantially perpendicular to said rolling plane (125).

2. A terrestrial vehicle according to claim 1, **characterized by** the fact that it further includes at least a first foot rest (30) and first means (31) for securing said first foot rest (30) to one (11) of the two side members, in such a manner that said first foot rest (30) is defined substantially in a second plane (32) substantially parallel to the rolling plane (125) and within said V-shaped space (18).

3. A terrestrial vehicle according to claim 2, **characterized by** the fact that it includes a second foot rest (33) and second means (34) for securing said second foot rest with the other one (12) of the two side members, in such a manner that said second foot rest is defined substantially in the second plane (32) and in said V-shaped space (18).

4. A terrestrial vehicle according to any one of claims 1 to 3, **characterized by** the fact that it includes first controllable blocking means (50) for blocking pivoting of said bracket (40) relative to said sleeve (7).

5. A terrestrial vehicle according to any one of claims 1 to 4, **characterized by** the fact that it includes second controllable blocking means (51) for blocking said two side members (11, 12) when they form said V-shaped space.

6. A terrestrial vehicle according to any one of claims 1 to 5, **characterized by** the fact that it includes plate means (60) formed on each side member (11, 12), the plate means (60) being defined in a third plane (61) substantially parallel to said rolling plane (125).

7. A terrestrial vehicle according to claim 6, **characterized by** the fact that said third plane (61) substantially contains the point (63) of said bracket (40) that is furthest from said rolling plane (125).

## Patentansprüche

1. Bodenfahrzeug des Typs Tretroller, Kinderroller oder dergleichen, das umfasst:
eine Lenksäule,
Mittel (2) zum Halten der Lenksäule durch eine Person, wobei diese Haltemittel an einem ersten Ende (3) der Lenksäule angeordnet sind,
erste Mittel (4) zum Rollen auf dem Erdboden (5), die an dem zweiten Ende (6) der Lenksäule (1) angeordnet sind,
eine Hülse (7) in Form eines Drehlagers, wobei die Lenksäule (1) in der Hülse (7) drehbar angebracht ist, derart, dass sich diese Hülse zwischen dem ersten und dem zweiten Ende (3, 6) der Lenksäule befindet,
zwei Längsträger (11, 12),
Mittel (13) zum Anbringen eines ersten Endes (14, 15) jedes der zwei Längsträger in Vereinigung mit der Hülse (7), derart, dass sich die zwei Längsträger (11, 12) einerseits in einer ersten Ebene (16) befinden, die mit der Achse (17) der Lenksäule einen von Null verschiedenen Winkel bildet, und andererseits einen im Wesentlichen V-förmigen Zwischenraum (18) zwischen ihnen begrenzen können, wobei sich der Scheitelpunkt (19) des V im Wesentlichen auf Höhe der Hülse (7) befindet, und
zweite und dritte Mittel (22, 23) zum Rollen auf dem Erdboden (5), die an den jeweiligen zweiten Enden (24, 25) der zwei Längsträger (11, 12) angeordnet sind, derart, dass jedes der drei Rollmittel (4, 22, 23) mit dem Erdboden (5) an wenigstens einem Kontaktpunkt in Kontakt gelangen kann, wobei die drei Kontaktpunkte eine Rollebene (125) definieren, **dadurch gekennzeichnet, dass** die Mittel (13) zum Anbringen des ersten Endes (14, 15) jedes der zwei Längsträger (11, 12) in Vereinigung mit der Hülse (7) umfassen:
eine Platte (40),
Mittel (42) zum Anbringen der Platte (40) drehbar (R₃) in Bezug auf die Hülse (7) um eine erste Drehachse (43), die zu der Achse (17) der Lenksäule (1) im Wesentlichen senkrecht ist, und
Mittel (41) zum Anbringen der ersten Enden (14, 15) der zwei Längsträger (11, 12) drehbar (R₁, R₂) in Bezug auf die Platte (40) um eine zweite bzw. eine dritte Achse (44, 45), die zu der Rollebene (125) im Wesentlichen senkrecht sind.

2. Bodenfahrzeug nach Anspruch 1, **dadurch gekennzeichnet, dass** es außerdem wenigstens eine erste Fußstütze (30) und erste Mittel (31) zum Befestigen der ersten Fußstütze (30) an einem (11) der zwei Längsträger umfasst, derart, dass diese Fußstütze (30) im Wesentlichen in einer zweiten Ebene (32), die zu der Rollebene (125) im Wesentlichen parallel ist, und in dem V-förmigen Raum (18) definiert ist.

3. Bodenfahrzeug nach Anspruch 2, **dadurch gekennzeichnet, dass** es eine zweite Fußstütze (33) und zweite Mittel (34) zum Befestigen dieser zweiten Fußstütze an dem anderen (12) der zwei Längsträger umfasst, derart, dass die zweite Fußstütze in der zweiten Ebene (32) und in dem V-förmigen Zwischenraum (18) im Wesentlichen definiert ist.

4. Bodenfahrzeug nach einem der Ansprüche 1 bis 3, **dadurch gekennzeichnet, dass** es erste steuerbare Mittel (50) zum Blockieren der Drehung der Platte (40) mit der Hülse (7) umfasst.

5. Bodenfahrzeug nach einem der Ansprüche 1 bis 4, **dadurch gekennzeichnet, dass** es zweite steuerbare Mittel (51) zum Blockieren der zwei Längsträger (11, 12), wenn sie den V-förmigen Raum bilden, umfasst.

6. Bodenfahrzeug nach einem der Ansprüche 1 bis 5, **dadurch gekennzeichnet, dass** es Plattenmittel (60) umfasst, die auf jedem Längsträger (11, 12) verwirklicht sind, wobei diese Plattenmittel (60) in einer dritten Ebene (61) definiert sind, die zu der Rollebene (125) im Wesentlichen parallel ist.

7. Bodenfahrzeug nach Anspruch 6, **dadurch gekennzeichnet, dass** die dritte Ebene (61) im Wesentlichen durch den Punkt (63) der Platte (40) verläuft, der von der Rollebene (125) am weitesten entfernt ist.
